# FASCICULE DE BREVET EUROPEEN

(11) **EP 0 568 468 B1**
(45) Date de publication et mention de la délivrance du brevet: **31.01.1996**
(21) Numéro de dépôt: 93420131.0
(22) Date de dépôt: 23.03.1993
(51) Int. Cl.: H04N 1/00

(54) **Installation automatique integrée pour la réalisation de photographies ou de séquences de photographies**
Integrierte automatische Anlage zur Realisierung von Photos oder Photosequenzen
Integrated automatic installation for realising photographs or sequences of photographs

(30) Priorité: 30.03.1992 FR 9204041
(43) Date de publication de la demande: 03.11.1993
(73) Titulaire: KIS, F-38100 Grenoble (FR)
(72) Inventeur: Gruel, Henri, F-38000 Grenoble (FR); Moraine, Michel, F-38240 Meylan (FR); Crasnianski, Serge, F-38240 Meylan (FR)
(74) Mandataire: Laurent, Michel

(56) Documents cités:
- EP-A- 0 458 311
- WO-A-90/00974
- WO-A-90/10251
- WO-A-90/16008
- CH-A- 477 703
- DE-A- 3 820 799
- FR-A- 2 665 315
- FR-A- 2 665 812
- GB-A- 2 235 347
- US-A- 4 864 410
- US-A- 4 868 674
- US-A- 4 888 605
- US-A- 5 006 871
- US-A- 5 077 584
- PATENT ABSTRACTS OF JAPAN vol. 11, no. 248 (P-604)13 Aoüt 1987 & JP-A-62 055 656 (DAINIPPON PRINTING CO. LTD.) 11 Mars 1987
- PATENT ABSTRACTS OF JAPAN vol. 15, no. 66 (E-1034)15 Février 1991 & JP-A-02 288 667 (SUMIMOTO METAL IND. LTD.) 28 Novembre 1990
- PATENT ABSTRACTS OF JAPAN vol. 16, no. 233 (E-1209)28 Mai 1992 & JP-A-04 046 475 (SHARP CORP.) 17 Février 1992
- PATENT ABSTRACTS OF JAPAN vol. 16, no. 27 (E-1158)23 Janvier 1992 & JP-A-03 241 993 (MITSUBISHI ELECTRIC CORP.) 29 Octobre 1991
- PATENT ABSTRACTS OF JAPAN vol. 12, no. 254 (E-634)16 Juillet 1988 & JP-A-63 039 290 (MERUTO KK) 19 Février 1988
- PATENT ABSTRACTS OF JAPAN vol. 10, no. 343 (E-456)19 Novembre 1986 & JP-A-61 144 994 (ATENA SYST. KK) 2 Juillet 1986
- PATENT ABSTRACTS OF JAPAN vol. 8, no. 21 (E-224)28 Janvier 1984 & JP-A-58 182 378 (HOUEI KK) 25 Octobre 1983
- PATENT ABSTRACTS OF JAPAN vol. 16, no. 233 (E-1209) 28 mai 1992 ; & JP-A-04 046 475
- PATENT ABSTRACTS OF JAPAN vol. 16, no. 27 (E-1158) 23 janvier 1992 ; & JP-A-03 241 993
- PATENT ABSTRACTS OF JAPAN vol. 12, no. 254 (E-634) 16 juillet 1988 ; & JP-A-63 039 290
- PATENT ABSTRACTS OF JAPAN vol. 10, no. 343 (E-456) 19 novembre 1986 ; & JP-A-61 144 994
- PATENT ABSTRACTS OF JAPAN vol. 8, no. 21 (E-224) 28 janvier 1984 ; & JP-A-58 182 378

## Description

L'invention concerne une installation perfectionnée, pour la réalisation de manière automatique de photographies ou de séquences de photographies, et notamment de photographies d'identité, de portraits ou de petits films enregistrés sur cassettes vidéo.

Le besoin de photos d'identité, tant pour les papiers officiels que pour les titres de transport, etc... existe depuis déjà longtemps, et ne fait que se développer. De fait, et devant l'affluence des demandes, des installations automatiques susceptibles de permettre la réalisation de telles photos d'identité sont rapidement apparues. De telles installations comportent généralement une cabine au moins partiellement obturable, munie d'un siège sur lequel le sujet à photographier prend place. Face au siège se trouve une glace transparente derrière laquelle est monté un appareil photographique, susceptible de tirer des photographies en association avec un flash ou une rampe d'éclairage. Après réglage approximatif de la hauteur du siège, l'utilisateur insère dans un monnayeur la somme requise pour provoquer l'activation de l'appareil photographique et le tirage d'une ou plusieurs photographies selon un format déterminé.

L'inconvénient de telles installations réside dans le fait que le réglage du positionnement du sujet n'est toujours qu'approximatif et rarement satisfaisant dans la mesure où l'auto-contrôle par le sujet du cadrage et de l'allure générale de la photographie n'est pas possible.

On a alors proposé des installations du type en question, munies en outre d'une caméra vidéo, reliée à un écran de visualisation, destiné à permettre la visualisation par le sujet de la photographie devant être prise. Cet écran est généralement positionné au niveau de la cloison de la cabine comportant le système d'acquisition de l'image, mais de manière désaxée par rapport à l'axe optique dudit système. Dès lors que ledit sujet est satisfait de la photo à prendre en visionnant ledit écran, il actionne par le biais d'un organe un appareil photographique du type de celui décrit précédemment, le tirage restant quant à lui traditionnel. On conçoit aisément, que ce faisant, le cliché obtenu n'est pas satisfaisant, puisque lorsque le sujet contrôle sur ledit écran la photo devant être prise, il ne regarde pas dans l'axe optique du système d'acquisition compte tenu du fait que l'écran n'est pas aligné sur ce trajet optique, et partant la photo obtenue matérialise le profil désaxé du sujet (voir par exemple le document EP-A-0 269 022).

On a alors proposé afin de pallier cet inconvénient, notamment dans le document US-A-4 864 410, d'acquérir la photographie par voie numérique, par l'intermédiaire d'une caméra vidéo, et de restituer l'image ainsi acquise sur un écran vidéo, situé sur l'axe optique de la caméra. Afin de ne pas interferer avec l'acquisition de l'image, l'écran vidéo est en fait positionné à 90 ° par rapport à l'axe optique de la caméra, et son image est virtuellement placée sur ledit axe optique au moyen d'un miroir semi-transparent orienté à 45° sur cet axe. De la sorte, l'utilisateur est à même de visualiser son image, tout en restant rigoureusement aligné avec la caméra susceptible après traitement ultérieur de délivrer une photographie. Si certes ce dispositif permet d'améliorer significativement la qualité, en termes de cadrage et d'auto-contrôle des clichés réalisés, en revanche, attendu que l'initiative de la prise de vue appartient toujours au dispositif, l'utilisateur ne dispose pas de la possibilité de choisir le moment précis du cliché.

Afin de donner davantage d'initiative à l'utilisateur, on a alors proposé, (voir par exemple FR-A-2 665 315), un dispositif automatique, dans lequel un certain nombre de prises de vue sont effectuées, puis proposées à l'utilisateur sur un écran vidéo. L'utilisateur effectue une sélection au moyen d'un sélecteur, afin d'obtenir le tirage de la prise de vue à sa convenance. Bien que constituant un perfectionnement en terme d'auto-contrôle par l'utilisateur, ce dispositif ne permet toujours pas de réaliser la photographie à l'instant voulu par ce dernier, c'est à dire lorsqu'il visualise sur l'écran vidéo l'image qui lui convient.

L'objet de l'invention vise à pallier ces différents inconvénients. Celle-ci vise une installation automatique intégrée, dans laquelle le sujet peut visualiser en continu et l'image captée par le dispositif d'acquisition de l'image, tout en regardant en permanence selon l'axe optique de ce dernier.

Cette installation pour la réalisation de photographies ou de séquences de photographies, comprend :
- un organe d'acquisition d'images ayant un axe optique et destiné à capter l'image optique du sujet se trouvant sur ledit axe optique et dont on désire réaliser une photographie ou une séquence de photographies,
- un organe de stockage des images captées par l'organe d'acquisition,
- un écran connecté à l'organe d'acquisition et destiné à reproduire l'image ou les images perçues par ledit organe d'acquisition,
- un miroir semi-transparent monté sur l'axe optique de l'organe d'acquisition et orienté selon la bissectrice de l'angle défini par l'axe optique de l'organe d'acquisition et l'axe orthogonal à la surface de l'écran, de telle sorte à générer une image virtuelle dudit écran sur l'axe optique de l'organe d'acquisition et à permettre la visualisation simultanée par ledit sujet de l'image ou les images perçues par ledit organe d'acquisition,
- une unité centrale de traitement reliée à l'organe d'acquisition et intégrant une carte de numérisation destinée à numériser les signaux 5 analogiques délivrés par ledit organe d'acquisition et correspondant aux images optiques captées par celui-ci, les signaux numériques ainsi obtenus étant susceptibles de subir un traitement au niveau de ladite unité centrale, puis étant acheminés au niveau de l'écran de telle sorte à permettre la visualisation simultanée par le sujet de l'image ou des images perçues par l'organe d'acquisition et éventuellement traités par l'unité centrale de traitement,
- un dispositif de réalisation pour effectuer la réalisation proprement dite de la photographie ou de la séquence de photographies,
- et un organe d'interaction entre l'unité centrale de traitement et le sujet, susceptible d'être actionné par ce dernier.

L'invention se caractérise en ce que ledit organe d'interaction est destiné, d'une part, à figer l'image reproduite sur l'écran à l'instant de son actionnement au niveau de la mémoire associée à ladite unité centrale de traitement et, d'autre part, à induire la réalisation de l'image ainsi figée sur support par le dispositif de réalisation connecté à ladite unité centrale.

En d'autres termes, l'invention consiste à permettre la réalisation d'un tirage sur injonction expresse du sujet. Ainsi, celui-ci en se regardant dans l'image virtuelle de l'écran, fixe à son insu l'organe d'acquisition, et peut ainsi décider à un instant t donné, la réalisation effective de l'image qu'il perçoit. De par le principe même du procédé d'acquisition, et compte tenu de la mise en mémoire de la prise de vue qui rencontre l'agrément du sujet, il est donc possible de tirer autant de fois que souhaité le cliché considéré.

L'organe d'acquisition est avantageusement et de manière connue escamoté derrière une vitre, de sorte que le sujet est à même de visualiser directement à ce niveau l'image perçue par ledit organe.

Selon une forme de réalisation de l'invention, le miroir semi-transparent est orienté à 45° d'une part, par rapport à l'organe d'acquisition et d'autre part, par rapport à l'écran. De la sorte, l'angle défini par les deux axes optiques, respectivement de l'organe d'acquisition et de l'écran est un angle droit.

Afin que cet organe ne soit pas visible par ledit sujet, l'espace situé derrière le miroir semi-transparent est dans la pénombre ou l'obscurité.

Selon l'invention, l'organe d'acquisition est choisi dans le groupe comprenant :
- une caméra vidéo ;
- un appareil photographique muni d'un capteur à dispositif à transfert de charges ;
- un scanneur couleur susceptible à partir d'une image, d'un texte ou d'une photographie donnés, d'analyser par balayage ladite image, et de transformer les signaux analogiques recueillis en signaux numériques, cette dernère étape pouvant également s'effectuer au moyen d'une carte de numérisation intégrée dans ladite unité de traitement;
- un magnétoscope associé à un écran vidéo, magnétoscope au niveau duquel on introduit une cassette vidéo dont on induit le défilement sur ledit écran, permettant la sélection par arrêt sur image de la ou des vues que l'on désire obtenir ;
- un appareil électronique permettant de lire une image préalablement enregistrée sous forme numérique sur un support amovible, tel qu'un CD-photo ou un lecteur de disquettes.

Selon une autre forme de réalisation de l'invention, l'organe d'acquisition comprend deux caméras, dont le champ d'acquisition est respectivement vertical et horizontal ; l'axe optique de l'une des deux caméras est confondu avec l'axe d'acquisition de l'installation ; l'axe optique de l'autre caméra étant virtuellement confondu avec ledit axe d'acquisition de l'installation au moyen d'un miroir semi-transparent, positionné selon la bissectrice des axes optiques réels des deux caméras. De la sorte, l'acquisition de prises de vue peut s'effectuer indifféremment par l'une, par l'autre ou par les deux caméras en fonction du type de photographies souhaité. Il est alors possible avec une telle installation, de tirer tant des photographies du type portrait, c'est à dire orientées veticalement, tant du type paysage, c'est à dire orientées horizontalement, et ce sans nécessiter une quelconque rotation mécanique de la caméra, et en conservant la qualité de résolution des photographies d'un type donné obtenues au moyen d'une installation adaptée à ce seul type.

Selon une caractéristique avantageuse de l'invention, l'unité centrale de traitement est en outre susceptible d'intégrer le sujet acquis sous forme de signaux numériques par ledit organe d'acquisition dans un fond, ce fond étant constitué de signaux numériques stockés dans une mémoire associée à l'unité de traitement, et pouvant se matérialiser soit sous la forme d'une autre image destinée à former avant-plan, arrière-plan ou en transparence sur ledit sujet, voire sous la forme d'un texte, celui-ci étant soit stocké dans ladite mémoire associée, et étant dans ce cas pré-défini, soit introduit dans ladite unité centrale de traitement par l'utilisateur de l'installation, et ce, au moyen d'un clavier.

Dans le même esprit, on peut jouer sur le format définitif de la prise de vue, soit en munissant l'organe d'acquisition d'un zoom, si ledit organe est constitué par une caméra vidéo ou par un appareil photographique, soit en faisant subir à l'image numérisée après acquisition une variation de format. Le choix du format peut être laissé à l'appréciation de l'utilisateur, ou peut être pré-réglé par l'exploitant, qui propose alors une pluralité de tailles, telles que par exemple les tailles requises selon les normes nationales.

Dans une version évoluée de l'invention, l'unité centrale de traitement comprend des moyens externes d'acquisition de données, notamment sous forme hertziennes, sous forme de liaison avec le réseau téléphonique commuté par modulateur et démodulateur ou avec le réseau numérique à intégration de services (RNIS), ou également par introduction directe par le biais d'un lecteur de supports magnétiques ou optiques, tels que notamment des disquettes ou des disques, données susceptibles d'être introduites au niveau de l'image à réaliser comme avant-plan, arrière plan, voire en transparence.

Dans un premier type de réalisation de l'installation, le dispositif de réalisation des photographies est constitué d'une imprimante couleur à sublimation thermique, connectée à l'unité centrale de traitement, afin de recevoir de celle-ci les signaux numériques correspondants à l'image retenue par le sujet.

Dans un autre type de réalisation de l'invention, on réalise non pas une photographie mais un film enregistré sur une cassette vidéo, directement à partir des images perçues par la caméra et traitées par l'unité centrale, et à partir des signaux sonores captés par un microphone intégré dans la cabine, le film ainsi réalisé étant alors enregistré au moyen d'un magnétoscope.

Dans une version évoluée du précédent type de réalisation, il est possible de mixer au niveau de l'unité centrale le film capté par la caméra vidéo avec soit un film enregistré sur une cassette vidéo et lisible au moyen d'un magnétoscope incorporé dans ladite installation, soit avec des signaux issus d'un video-disque, et lisible par un lecteur adapté également incorporé à l'installation.

Dans un autre type de réalisation de l'invention, le dispositif de réalisation des photographies est constitué par une unité de tirage de photographies, comprenant :
- un organe de stockage, de défilement et d'exposition d'un papier photosensible inversible ou non-inversible, destiné à être insolé par des signaux lumineux ;
- une unité de traitement chimique, constituée d'une pluralité de bains juxtaposés et munie d'un organe de transfert automatique du papier insolé dans les différents bains ;
- et un organe destiné à assurer le séchage du cliché ainsi obtenu après tirage ;
- une unité de traitement numérique, intégrée ou connectée à l'unité centrale de traitement, et susceptible de faire subir aux signaux issus de ladite unité centrale un traitement d'inversion vidéo ;
- un écran, connecté à ladite unité de traitement et destiné à matérialiser en négatif l'image à réaliser ;
- au moins un objectif placé sur l'axe optique dudit écran et destiné à projeter l'image matérialisée de l'écran, et à adapter son format au niveau de la zone d'exposition dudit papier photosensible.

Par traitement d"'inversion vidéo", on entend un traitement susceptible de transformer une image positive couleur ou en noir et blanc, en image négative couleur ou noir et blanc, au sens où on l'entend dans le domaine de la photographie, avec les ajustements chromatiques adéquats. Ces corrections chromatiques permettent d'obtenir des photographies de qualité optimale par compensation des différentes dérives du système, ce que les dispositifs conventionnels ne permettent pas de réaliser.

De la même manière, un papier photosensible "non-inversible" est, de manière connue, susceptible de restituer une image positive à partir d'une exposition par des signaux lumineux d'une image négative. Parallèlement, un papier photosensible "inversible" est susceptible de restituer une image positive à partir d'une exposition par des signaux lumineux d'une image positive.

En d'autres termes, cette forme de réalisation a pour but de permettre à partir des signaux numériques représentatifs d'une image, et par exemple d'un sujet, d'obtenir une photographie conventionnelle par voie chimique.

L'écran jouant le role de source lumineuse est un écran couleur ou un écran noir et blanc associé à des filtres chromatiques interposés sur son axe optique au voisinage de l'objectif, afin de restituer l'image en couleur au niveau du papier photosensible à insoler.

Selon une version avantageuse de ce dernier type d'installation, l'organe de stockage du papier photosensible est constitué par deux cassettes, l'extrémité de chacun des rouleaux de papier qu'elles renferment étant amorcée au niveau d'un jeu de rouleaux moteur-presseur respectif, et l'une des cassettes comportant au voisinage de sa fente de sortie un organe de détection de présence de la fin du papier, induisant le renvidage dudit papier à l'intérieur de la cassette considérée, et corrélativement l'amorçage du jeu de rouleaux moteur-presseur de la seconde cassette, afin de provoquer son défilement au niveau de la zone d'exposition.

La manière dont l'invention peut être réalisée et les avantages qui en découlent ressortiront mieux des exemples de réalisation qui suivent, donnés à titre indicatif et non limitatif à l'appui des figures annexées.

La figure 1 est une représentation schématique en perspective de l'installation conforme à l'invention.

La figure 2 est une représentation schématique de ladite installation selon une première forme de réalisation de l'invention.

La figure 3 est une représentation schématique d'une autre forme de réalisation de l'invention.

La figure 4 est une représentation schématique de l'organe d'interaction de l'invention.

La figure 5 est une vue synoptique simplifiée de l'installation à double-caméra.

La figure 6 est une représentation schématique d'une autre forme de réalisation de l'installation de la figure 3.

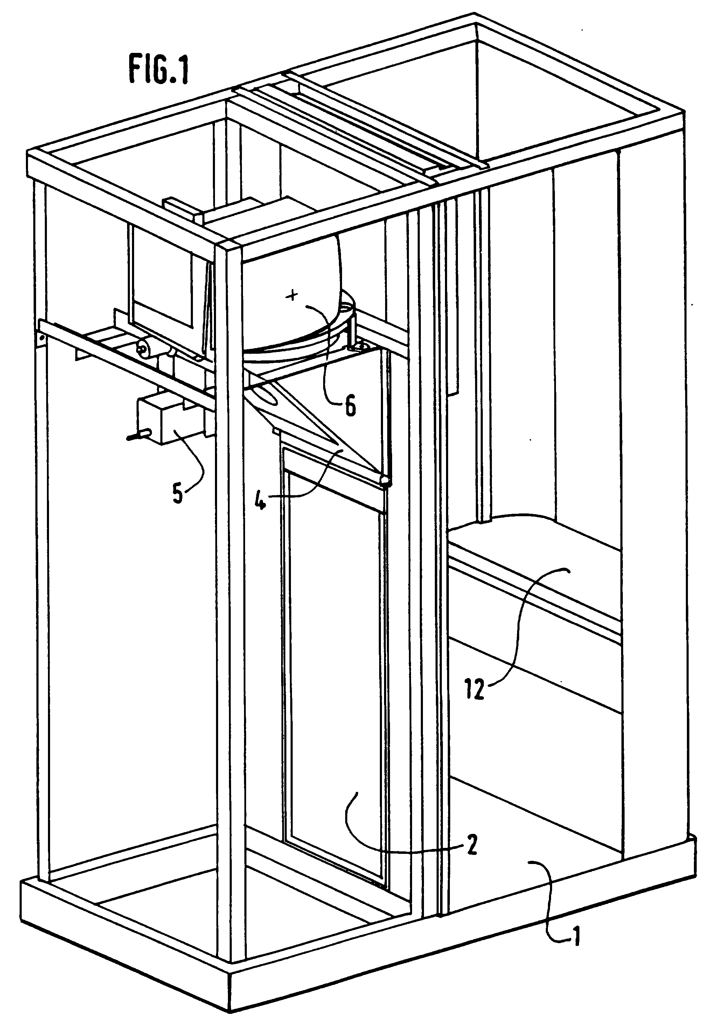

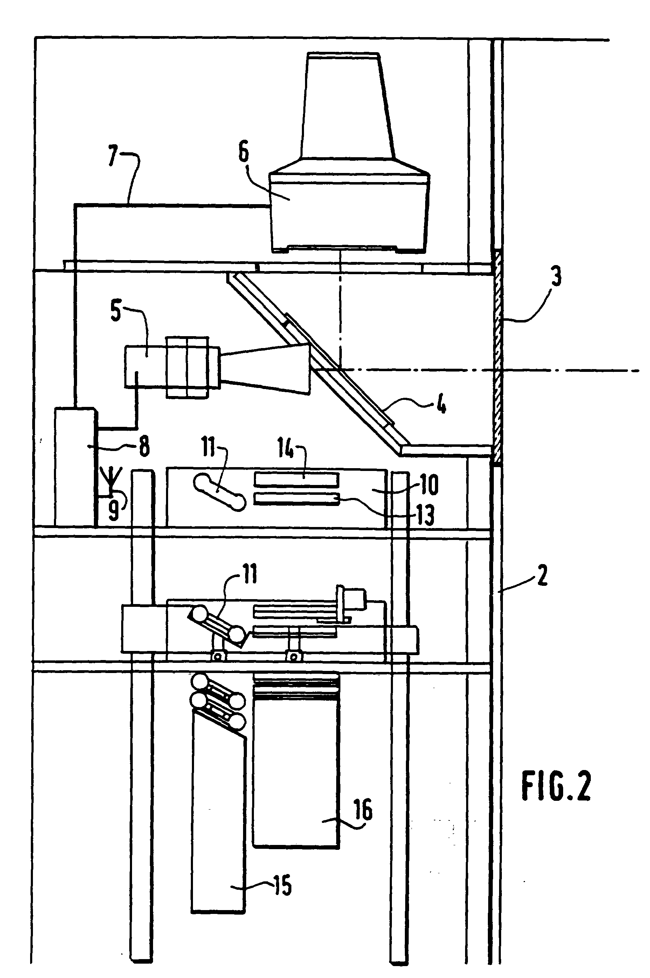

Comme on peut le voir sur les figures 1 et 2, l'installation conforme à l'invention comporte une cabine (1), comportant un siège réglable en hauteur (12), sur lequel est susceptible de s'asseoir le ou les sujets d'une photographie, ou d'une séquence de photographies. Traditionnellement, cette cabine comporte sur l'une de ses faces une cloison (2), dont partie (3) au moins est vitrée, afin de permettre le cheminement des signaux lumineux vers la zone d'acquisition de l'image.

Celle-ci comprend fondamentalement un organe d'acquisition, constitué ici par une caméra video (5), dont l'objectif est dirigé vers la vitre (3), son axe optique étant ainsi globalement horizontal. La caméra (5) est directement connectée avec une unité centrale de traitement (8), destinée à permettre la réalisation de l'acquisition et du traitement de l'image définitive à réaliser. Cette unité de traitement (8) est connectée (7) avec un écran de restitution visuelle (6), orienté à 90 ° par rapport à la caméra, et positionné de telle sorte que son axe optique concoure avec celui de la caméra (5) au niveau de la vitre (3). Ainsi les axes optiques de la caméra (5) et de l'écran (6) forment entre eux un angle de 90°. L'écran (6) est destiné à reproduire immédiatement les images perçues par la caméra et traitées par l'unité centrale (8). Un miroir semi-transparent (4) est positionné au point de concours des deux axes optiques, selon la bissectrice dudit angle. Il se trouve donc orienté à 45° par rapport à l'axe optique de la caméra (5).

Selon l'invention, l'unité centrale (8) comporte une carte de numérisation, destinée à transformer les signaux analogiques générés par ladite caméra en signaux numériques. Les signaux numériques ainsi obtenus sont stockés dans une mémoire associée à ladite unité centrale, typiquement constituée par un micro-ordinateur.

Selon une caractéristique avantageuse de l'invention, ladite mémoire stocke également des fonds ou des avant-plans, du type paysages, personnages célèbres, manifestations particulières, etc., sélectionnables par le sujet, et destinés à apparaître au choix de ce dernier en avant-plan, en arrière-plan, voire en transparence sur ledit sujet. Dans le cas particulier de la réalisation d'un petit film, ces images stockées sont susceptibles d'être animées, et partant, d'être restituées ainsi dans le film.

Selon une autre caractéristique particulièrement avantageuse de l'invention, l'unité centrale (8) comporte des moyens externes d'acquisition de données, notamment du type de celles décrites dans le paragraphe précédent. Ces moyens externes sont de toute nature, et peuvent notamment être constitués par une antenne (9), susceptible de capter des signaux hertziens, permettant ainsi un télé-chargement, mais également un modem (modulateur-démodulateur) relié au réseau téléphonique commuté, voire au réseau numérique à intégration de services. De telles informations peuvent également être introduites dans l'unité centrale par un simple lecteur de supports magnétiques, et notamment de disquettes, voire optiques.

On conçoit de la sorte qu'une multitude de choix possibles sont offerts au sujet, qui peut désirer être photographié en liaison avec l'actualité ou les grands événements.

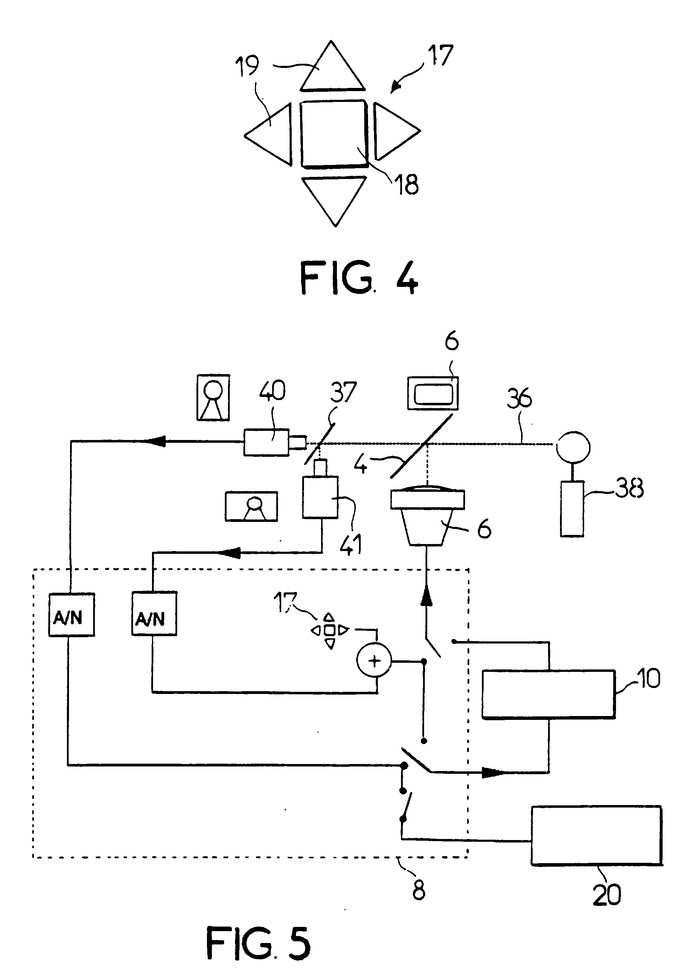

Pour ce faire, une fois le sujet en place face à la vitre (3), il est immédiatement filmé par la caméra (5), et son image, ainsi que l'avant-plan, l'arrière plan et/ou l'image en transparence sélectionnés apparaissent également en arrière plan par rapport à la vitre (3), compte tenu de la matérialisation de l'image virtuelle de l'écran par le miroir semi-transparent (4). Il peut ainsi à loisir modifier sa position, son sourire, etc., jusqu'à aboutir à une image qui lui convient. Il induit alors la réalisation de la photographie correspondante en activant un organe de commande (ou d'interaction) (17), tel que représenté sur la figure 4, qui induit tout d'abord l'immobilisation instantannée de l'image correspondante dans ladite unité centrale (8), et ensuite provoque l'activation d'un dispositif de réalisation de l'image ainsi sélectionnée par voie interactive par le sujet.

Cet organe d'interaction (17) comprend notamment un bouton poussoir central de validation (18) par lequel on aboutit à l'immobilisation de l'image, et quatre boutons en forme de flèche (19), susceptibles d'induire le déplacement d'un curseur au niveau d'écrans d'instructions (non représentés), ménagés au sein de la cloison (2), et connectés à l'unité centrale de traitement (8). De fait, chaque écran d'instruction est réalisé selon le même principe, de sorte qu'un utilisateur peut apprendre sur le premier écran le fonctionnement de ce principe, et peut en déduire le fonctionnement de la suite du programme en termes de fonctionnement de l'installation et de ses diverses possibilités.

De manière avantageuse, cet organe d'interaction (17) est positionné sur un pupitre incliné, de telle sorte que l'utilisateur puisse l'actionner sans bouger les épaules.

Dans une première forme de réalisation de l'invention, l'organe de réalisation de l'image est constitué par une imprimante, par exemple à sublimation thermique (10), du type HITACHI VY 150 A ou 200 A, susceptible, à partir des signaux numériques transmis par ladite unité centrale (8), de restituer une épreuve en couleur de qualité sensiblement comparable à celle d'une photographie. Bien que ne constituant pas l'objet de l'invention, le principe de fonctionnement d'une telle imprimante va être succintement décrit.

Celui-ci est basé sur le principe de la synthèse soustractive, à partir des trois couleurs fondamentales jaune, magenta et cyan. Ces pigments sont préalablement enduits sur un film thermique (11), susceptible d'être chauffé localement par les aiguilles de la tête d'impression de l'imprimante, en fonction des signaux numériques reçus de l'unité centrale (8). Ce film thermique est divisé en zones de surface correspondant à la surface de la photographie à réaliser, et successivement enduites de pigment jaune, magenta et cyan, se présentant sous forme solide. Le support sur lequel les photos doivent être réalisées, se présente sous forme de feuilles typiquement réalisées en polyéthylène ou polyester, et comportant à leur surface une couche d'un matériau, susceptible de permettre la diffusion des pigments lorsque ceux-ci, sous l'action des aiguilles chauffées de la tête d'impression, sont sublimés et diffusent à sa surface. L'importance de cette diffusion est fonction d'une part de l'intensité, et d'autre part de la durée du chauffage. Les feuilles du support sont avantageusement stockées dans un magasin papier (13), du type de ceux connus pour les photocopieurs, et autres imprimantes laser.

La photo à impressionner est "imprimée" ligne par ligne, ou trame par trame par la tête d'impression pour chacun des pigments, selon les deux possibilités suivantes :
- le film thermique et le support restent fixes, et la tête d'impression se déplace selon toute la longueur de la photo ;
- la tête d'impression est fixe, et le film thermique et le papier se déplacent selon une longueur correspondant à celle de la photo à réaliser.

La photo alors obtenue sort de l'imprimante par l'orifice de sortie papier (14), avant d'être acheminée par tout moyen approprié à un réceptacle de préhension de celle-ci par le sujet.

Selon une caractéristique avantageuse de l'invention, et afin d'augmenter l'autonomie de fonctionnement d'une telle imprimante, on munit l'installation d'un chargeur automatique (15) de film thermique, destiné à remplacer la cassette de film thermique utilisée par une nouvelle, et d'un chargeur automatique (16) de cassette (13) de support de photographie.

De tels chargeurs automatiques sont en eux-mêmes connus pour des applications équivalentes. Ils présentent typiquement une enceinte au niveau de laquelle sont empilées les cassettes de support ou de film thermique, et comportent un doigt de poussée ou un système équivalent, destiné à permettre l'évacuation de la cassette terminée, et un organe de préhension, par exemple muni de ventouses, pour permettre la mise en place d'une nouvelle cassette dans sa position opérationnelle.

Comme déjà dit, le sujet peut désirer un arrière-plan ou un avant-plan sur la photographie. Pour ce faire, il sélectionne parmi les fonds en mémoire dans l'unité centrale (8) celui de son choix, qui est alors intégré dans la photographie par ladite unité centrale et est restitué sur l'écran (6).

En outre, il est possible dans ce contexte d'incruster une photo en format portrait, donc à orientation verticale, au sein d'une image à orientation privilégiée horizontale, par exemple de format double du format portrait de la photo, ladite photo étant susceptible d'être incrustée en n'importe quel point de l'image horizontale. L'ensemble ainsi visualisé au niveau de l'écran, subit un traitement au niveau de l'unité centrale, préalablement à sa réalisation proprement dite sur support.

Le processus est le même lorsqu'il s'agit de petits films. Dans ce cas, l'installation comporte également un microphone susceptible d'enregistrer la déclaration du sujet avec les images de celui-ci. Comme dans le cas des photographies, il peut intégrer au film un fond animé sélectionné par lui, ou introduit sous la forme de disquettes, de vidéodisques ou tout moyen équivalent dans l'unité centrale par lecture au moyen d'un lecteur approprié, qui traite alors l'intégration des images captées par la caméra et du fond. Cette intégration peut également s'effectuer à partir d'un film proprement dit, enregistré sur une cassette vidéo, et lu dans l'unité de traitement par un magnétoscope. Dans ce cas, le film obtenu est lui-même enregistré notamment sur une cassette vidéo au moyen d'un autre magnétoscope. L'utilisateur obtient alors cette cassette vidéo éjectée du magnétoscope après enregistrement dudit film.

Dans une version évoluée de l'invention, l'unité centrale (8) peut également intégrer dans la photo ou dans le film des incrustations de texte, du type message prédéfini sélectionnable par le sujet, ou encore, un texte introduit par le sujet lui-même au moyen d'un clavier (non représenté) disposé dans la cabine. On obtient ainsi une installation de photocomposition en self service, permettant d'obtenir par exemple des cartes de visite ou cartes commerciales avec photo en couleur, ou produit équivalents.

Dans une autre forme de réalisation de l'invention, l'organe de réalisation de l'image est constitué par une unité de tirage et de développement d'un papier photosensible par voie chimique.

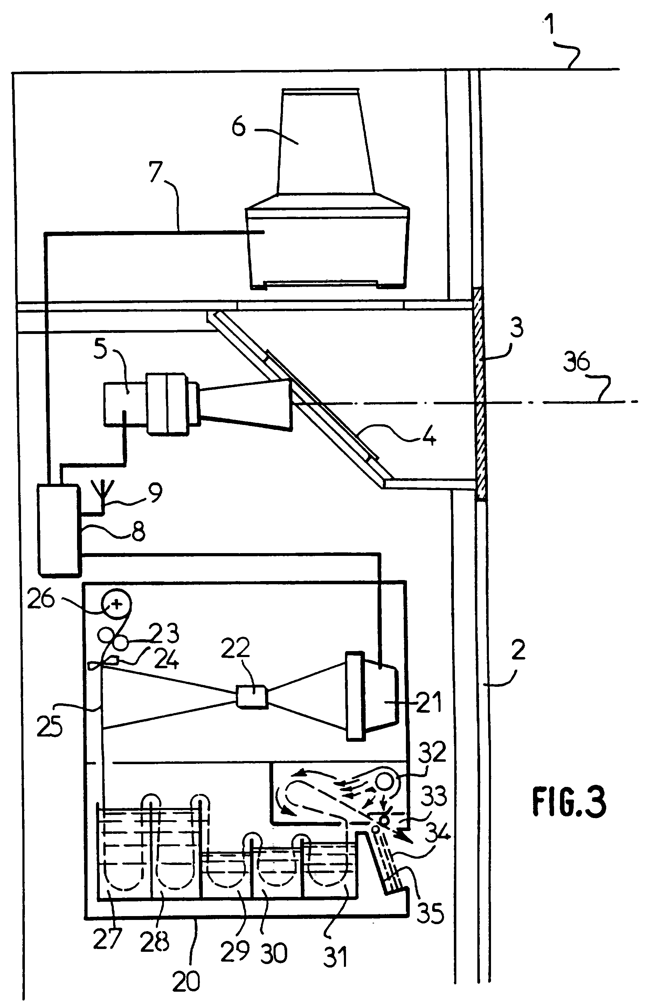

Selon cette version représentée sur la figure 3, l'installation comporte fondamentalement une enceinte (20), dont une partie est étanche à la lumière afin de former chambre noire. Cette partie constituant chambre noire est destinée à permettre l'insolation d'un papier photosensible (25), tel qu'il sera décrit ultérieurement. Fondamentalement, elle comprend un écran (21) susceptible de restituer une image traitée, un objectif (22), situé sur l'axe optique dudit écran (21) et, le papier photosensible inversible ou non inversible (25), stocké sous la forme d'une bobine et enfermé de manière traditionnelle dans une cassette (26) amovible et interchangeable, étanche également à la lumière. L'objectif (22) est de manière connue, destiné à projeter au niveau du papier photosensible (25) l'image reproduite sur l'écran (21). Dans une version évoluée de l'invention, cet objectif peut être remplacé par un objectif aux caractéristiques optiques différentes, afin notamment, de modifier le format de la photo finale. Dans une version destinée aux cabines automatiques de prises de vue, pour les photos d'identité, l'objectif peut être ainsi constitué de quatre objectifs afin d'obtenir directement un cliché comportant quatre photos d'identié.

Ainsi, le papier issu de la cassette est acheminé au moyen d'un organe (23), typiquement des rouleaux moteur et presseur, vers la zone d'insolation et d'exposition, puis est coupé au format voulu par une cisaille (24) ou tout dispositif approprié, dès que la durée d'exposition a atteint la valeur fixée.

De fait et après insolation pendant une durée suffisante, le papier (25) est pris en charge par un système automatique, qui achemine ledit papier insolé au niveau des bains de traitement chimique, par passage automatique successif tout d'abord dans le révélateur (27), le blanchiment fixage (28), et différents bains de lavage successifs, trois par exemple (29,30,31), avant d'être séché, notamment par le biais d'un ventilateur (32) dans une enceinte (33) de séchage. Enfin, il est acheminé dans un réceptacle (35) au niveau duquel les tirages (34) sont alors disponibles.

Le fonctionnement d'une telle installation de tirage proprement dite est décrit plus en détail dans le document EP-A-0 296 080.

Selon l'invention, les signaux acheminés au niveau de l'écran (21) sont des signaux analogiques ou numériques, issus d'un traitement au niveau d'une unité centrale de traitement (8), après acquisition par un organe d'acquisition, et typiquement par la caméra vidéo (5)

Quel que soit l'organe d'acquisition des signaux, et postérieurement à leur numérisation, ils subissent au niveau de l'unité centrale (8), et dans cette forme de réalisation, un traitement d'inversion vidéo, c'est à dire de transformation de l'image ainsi acquise en image négative, tout au moins dans le sens où on l'entend dans le domaine de la photographie.

Typiquement, ce traitement d'inversion vidéo s'effectue au moyen d'un logiciel approprié. Celui-ci, à partir de l'image numérisée, dont les signaux pour chaque pixel correspondent à l'intensité dans chacune des couleurs de base, à savoir, rouge, vert et bleu, l'intensité I s'étalant entre 0 et 255, consiste à inverser ces valeurs, en rempaçant la valeur I de l'intensité pour chacune des couleurs par la valeur 255 - I. Ce traitement s'accompagne également d'ajustements chromatiques, afin de tenir compte d'une part de l'interdépendances des couleurs, d'autre part, de la perception de celles-ci par l'oeil humain, et également de la sensibilité plus ou moins sélective du papier photosensible par rapport aux couleurs.

L'image acquise par la caméra (5) puis traitée par l'unité centrale (8) est comme déjà dit visualisée en temps réel par le sujet au niveau de l'écran (6). Ainsi, dès lors que l'image qu'il perçoit lui convient, il la fige par l'organe interactif (17), et ce, tant sur l'écran que dans la mémoire de l'unité centrale (8). Cette image figée, stockée dans la dite unité centrale sous la forme de signaux numériques, subit au niveau de celle-ci le traitement d'inversion vidéo avant d'être transmise à l'écran (21) de l'unité de tirage (20), au niveau duquel ils sont restitués visuellement sous la forme d'une image négative. Néanmoins, dans une autre forme de réalisation, le traitement d'inversion vidéo peut être effectué en analogique au niveau de l'écran (21). Ces signaux optiques lumineux transitent alors par l'objectif (22), afin d'adapter le format de l'image ainsi restituée au format désiré, puis viennent insoler le papier photosensible non-inversible (25), qui et de manière connue, sur la base d'une image négative restitue un image positive après tirage dans les bains de traitement chimique déjà décrits.

Dans une autre version de cette forme de réalisation, les signaux numériques obtenus après acquisition et agrément du sujet ne subissent pas de traitement d'inversion video, et sont acheminés directement à l'écran (21) de l'unité de tirage (20) sous la forme d'une image en positif, qui transite par le biais de l'objectif (22) au niveau d'un papier photosensible inversible (25), afin de restituer une image positive.

Les produits chimiques des bains de traitement sont à oxydation lente, afin d'une part, d'augmenter l'autonomie de fonctionnement de l'unité de tirage, et d'autre part, d'alléger la maintenance générale de l'installation. Typiquement, avec des bains appropriés, il est possible d'obtenir des photos de bonne qualité pendant plusieurs mois avec les mêmes bains.

Afin d'obtenir des photos de bonne qualité artistique, il importe d'utiliser un écran (21) plat, susceptible de corriger les aberrations chromatiques et géométriques, et dont le défaut de vignettage, c'est à dire de surexposition du centre par rapport aux coins n'excède pas un tiers de la valeur du diaphragme.

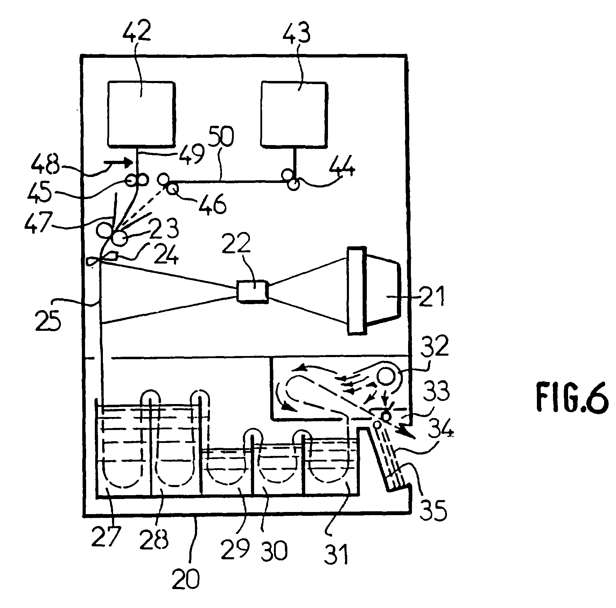

Dans une version avantageuse de cette forme de réalisation, on munit l'unité de tirage (20) non pas d'une mais de deux cassettes de papier photosensibles. En se reportant à la figure 6, on peut observer les deux cassettes respectivement (42) et (43), dont l'extrémité de la bobine de papier photosensible est préalablement amorcée au niveau d'organes moteurs, typiquement constitués pas un jeu de deux rouleaux moteur-presseur (45,46). En outre, le papier issu de la cassette (43), désaxée par rapport à l'organe d'introduction (47) et l'organe de défilement (23), est renvoyé au moyen de rouleaux de renvoi (44). La cassette (42) comporte également au niveau de la fente de sortie du papier, un détecteur de fin de papier (48), par exemple constitué par une cellule photo-électrique, qui induit, lorsqu'il détecte effectivement la zone de fin de papier au niveau de la bande papier (49), le fonctionnement des rouleaux (45) de telle sorte à retirer la bande papier hors de l'organe d'introduction (47), et son retrait à l'intérieur de la cassette (42), et corrélativement l'introduction de la bande papier (50) issue de la cassette (43) au niveau de l'organe d'introduction (47), qui lui-même guide ladite bande (50) au niveau de l'organe de défilement (23), de telle sorte à prendre en charge celle-ci dans le processus de tirage.

Ainsi, la maintenance de l'installation s'en trouve d'autant allégée, puisque la quantité de consommable peut être doublée. En outre, cette variante permet également de réaliser une réelle économie, puisque lorsque l'on dispose d'une seule cassette, compte tenu de la périodicité des visites du service de maintenance, il importe de procéder au changement de la cassette, quel que soit la quantité de papier photosensible restant dans celle-ci, papier irrémédiablement perdu.

Les différents exemples précédents décrits disposaient d'une caméra' comme organe d'acquisition de signaux. Or cet organe peut être constitué par d'autres dispositifs et, par exemple, par un scanneur qui, de manière connue, transforme une image, une photographie, voire un texte selon une carte graphique, susceptible ensuite d'être numérisée au niveau de l'unité centrale de traitement (8). Ce scanneur peut être de type couleur. Il constitue de manière avantageuse un périphérique de l'unité centrale (8). Ce scanneur permet par exemple de réaliser de nouveaux clichés à partir d'une photo qui plait, permet en outre de rajouter un texte en légende d'une telle photo. De la même manière, il permet d'intégrer au sein de papiers commerciaux ou d'identification le logotype d'une entreprise, ou un signe quelconque de reconaissance.

Dans une autre forme de réalisation, cet organe d'acquisition est constitué par un appareil photo traditionnel, mais muni d'un capteur à dispositif à transfert de charges de type vidéo. Ce capteur est relié directement par une connection physique, et notamment par un câble à ladite unité centrale (8), au niveau de laquelle les signaux ainsi captés sont numérisés. Dans une autre forme de réalisation, dans laquelle le système d'acquisition est également constitué par un appareil photo, celui-ci comporte outre un capteur à dispositif à transfert de charges, un dispositif de stockage desdits signaux sur une disquette et notamment une vidéo-disquette, par exemple dans un format deux pouces, qui, après acquisition, est susceptible d'être lue au moyen d'un lecteur approprié raccordée à ladite unité centrale (8). De fait, il y a alors transfert des signaux enregistrés sur la disquette dans l'unité centrale au niveau de laquelle ils subissent tout d'abord un numérisation avant le traitement ultérieur.

On peut également prévoir comme système d'acquisition, un lecteur de disquettes ou de CD-photos, sur lesquels sont stockés des signaux numériques représentatifs d'une image donnée, d'un texte, ou de toute donnée représentative d'une restitution visuelle.

Dans certaines versions particulièrement avantageuses, on peut également munir l'installation d'un magnétoscope, destiné à permettre la lecture d'une cassette vidéo sur laquelle sont stockés des signaux analogiques représentatifs d'une séquence quelconque. De fait, et en utilisant la touche "arrêt sur image", dont sont munis tous les magnétoscopes, et en faisant défiler ladite cassette au niveau d'un écran vidéo associé au magnétoscope, il est possible de sélectionner une vue particulière, de la basculer dans l'unité centrale (8), au niveau de laquelle, elle subit le traitement de numérisation, puis d'inversion vidéo.

Dans une version évoluée de l'invention (voir figure 5), l'organe d'acquisition comporte deux caméras (40,41), dont le champ d'acquisition est respectivement vertical et horizontal. En outre, l'axe optique de l'une (40) des deux caméras est réellement confondu avec l'axe d'acquisition (36) de l'installation. En revanche, l'axe optique de l'autre caméra (41) est virtuellement confondu avec ledit axe d'acquisition (36) de l'installation, et ce, au moyen d'un miroir semi-transparent (37), positionné selon la bissectrice des axes optiques réels des deux caméras (40,41).

Ainsi, et compte tenu de cette disposition spatiale, les signaux captés par la caméra (40) traversent deux miroirs semi-transparents (4,37), de sorte que quelle que soit la caméra qui capte les signaux, ceux-ci sont immédiatement visibles sur l'écran de visualisation (6), tel que cela a été précédemment décrit, après transit et traitement sous forme numérique au niveau de l'unité centrale de traitement (8). On conçoit aisément que de par l'utilisation des miroirs semi-transparents, le sujet fixe en permanence, et toujours à son insu les deux caméras en visualisant l'écran (6).

Par "champ d'acquisition" des caméras, on entend la surface effectivement acquise par la caméra, et pour laquelle la résolution demeure telle que l'on obtienne une restitution de bonne qualité en terme d'image. Typiquement, les caméras CCD aujourd'hui disponibles présentent une résolution de 768 x 576 pixels, de sorte que le champ d'acquisition est globalement rectangulaire. De fait, il existe une orientation privilégiée de ce type de caméra. Aussi, dès lors que l'on désire procéder à la réalisation de photos de type "paysage", c'est à dire à orientation privilégiée horizontale, convient-il de faire appel à une caméra orientée de manière correspondante pour obtenir la résolution voulue au niveau de la photo réalisée. Il en est de même si l'on désire procéder à la réalisation de photos type "portrait" ou photos d'identité, dans lequel l'orientation privilégiée est alors verticale.

Avec le système d'acquisition à double caméras de l'invention, l'acquisition de prises de vue peut s'effectuer indifféremment par l'une, par l'autre ou par les deux caméras en fonction du type de photographies souhaité. Il est alors possible avec une telle installation, de tirer tant des photographies du type portrait, c'est à dire orientées veticalement, que du type paysage, c'est à dire orientées horizontalement, et ce sans nécessiter une quelconque rotation mécanique de la caméra, tout en conservant la qualité de résolution des photographies d'un type donné obtenues au moyen d'une installation adaptée à ce seul type. L'utilisation de l'écran de visualisation (6), l'immobilisation de l'image sur cet écran par le sujet (38) par l'intermédiaire de l'organe d'interaction (17), et la réalisation des connexions appropriées sont gérés par l'unité centrale (8), à l'intérieur de laquelle on a par ailleurs matérialisé les cartes de numérisation A/N.

Si le sujet (38) entend obtenir une photo en mode portrait, il sélectionne préalablement par l'intermédiaire de l'organe interactif (17) ce mode. La caméra (40) est dans ce cas destinée à assurer l'acquisition des signaux captés, en vue de leur traitement dans l'unité centrale (8), puis de l'impression de l'image figée par ledit sujet. Corrolairement, la caméra (41) sert à la visualisation et au contrôle par le sujet, compte tenu que dans l'exemple décrit, l'écran de visualisation est lui-même orienté selon le mode paysage.

Dans le cas inverse, c'est à dire si le sujet entend obtenir une photo en mode paysage, c'est alors la caméra (41) qui dans ce cas assure à la fois la visualisation pour contrôle par le biais de l'écran (6), et l'acquisition des signaux pour l'impression ou le tirage de la photo.

On conçoit ainsi qu'il est possible d'obtenir avec l'installation conforme à l'invention des photographies à partir de n'importe quels signaux numériques dont l'origine est une image physique ou synthétique.

Dans certaines applications particulières telles que notamment les cartes de visite, il est possible d'associer à l'unité centrale (8) un clavier (non représenté), destiné à permettre à l'utilisateur de l'installation d'insérer au niveau du support de la photo certains textes.

De la sorte, après traitement au niveau de ladite unité centrale, il est possible avec l'installation conforme à l'invention, de réaliser des cartes de visite, comportant d'une part, une photographie du titulaire de la carte, et d'autre part, un texte imprimé photographiquement sur ladite carte. En outre, et compte tenu de l'installation, il est possible de réaliser des clichés de format 9 x 13 cm et 10 x 15 cm, et ce tant en mode portrait - photos d'identité, qu'en mode paysage. Il est également possible en utilisant cette installation de réaliser des cartes postales en collant au dos des clichés obtenus un support adhésif, matérialisant par exemple la séparation adresse/texte, etc...

Enfin, on peut de manière tout à fait avantageuse utiliser des photos ainsi obtenues sur des systèmes d'identification, tels que notamment des badges en polyester. Dans ce cas, il suffit de prévoir ces badges munis d'une feuille pelable, protégeant la couche d'adhésif, et escamotable lors de la mise en place du cliché obtenu.

On conçoit de la sorte qu'une telle installation s'avère particulièrement interessante pour la réalisation tant de photographies, portraits, du type de ceux obtenus à ce jour, mais également de petits films, susceptibles d'être utilisés tant pour des curriculum vitae, que pour des déclarations de toute nature. Cette installation allie à la fois la qualité des restitutions obtenues à la grande variété de celles-ci.

En outre, dans les versions équipées du système à téléchargement, leur maintenance peut être assurée automatiquement.

Enfin, du fait même du principe d'acquisition de l'image, celle-ci est modifiable aussi longtemps qu'elle ne recontre pas l'agrément du sujet, puisqu'elle est stockée en mémoire. Corollairement et pour la même raison, on peut en effectuer autant de tirages que désiré. De plus, le montage avec fond est visualisable en temps réel au niveau de l'écran.

## Revendications

1. Installation pour la réalisation de photographies ou de séquences de photographies, comprenant :
- un organe d'acquisition d'images (5,40,41) ayant un axe optique et destiné à capter l'image optique du sujet (38) se trouvant sur ledit axe optique et dont on désire réaliser une photographie ou une séquence de photographies,
- un organe de stockage (8) des images captées par l'organe d'acquisition,
- un écran (6) connecté à l'organe d'acquisition (5,40,41) et destiné à reproduire l'image ou les images perçues par ledit organe d'acquisition,
- un miroir semi-transparent (4) monté sur l'axe optique de l'organe d'acquisition (5,40,41) et orienté selon la bissectrice de l'angle défini par l'axe optique de l'organe d'acquisition (5,40,41) et l'axe orthogonal à la surface de l'écran (6) de telle sorte à générer une image virtuelle dudit écran sur l'axe optique de l'organe d'acquisition et à permettre la visualisation simultanée par ledit sujet (38) de l'image ou les images perçues par ledit organe d'acquisition,
- une unité centrale de traitement (8) reliée à l'organe d'acquisition (5,40,41) et intégrant une carte de numérisation destinée à numériser les signaux analogiques délivrés par ledit organe d'acquisition et correspondant aux images optiques captées par celui-ci, les signaux numériques ainsi obtenus étant susceptibles de subir un traitement au niveau de ladite unité centrale, puis étant acheminés au niveau de l'écran (6) de telle sorte à permettre la visualisation simultanée par le sujet (38) de l'image ou des images perçues par l'organe d'acquisition (5,40,41) et éventuellement traités par l'unité centrale de traitement (8),
- un dispositif de réalisation (10,20) pour effectuer la réalisation proprement dite de la photographie ou de la séquence de photographies,
- et un organe d'interaction (17) entre l'unité centrale de traitement (8) et le sujet, susceptible d'être actionné par ce dernier,
*caractérisée* en ce que ledit organe d'interaction est destiné, d'une part, à figer l'image reproduite sur l'écran (6) à l'instant de son actionnement au niveau de la mémoire associée à l'unité centrale (8) et, d'autre part, à induire la réalisation de l'image ainsi figée sur support par le dispositif de réalisation (10,20) connecté à ladite unité centrale.

2. Installation selon la revendication 1, ***caractérisée*** en ce que le miroir semi-transparent (4) est orienté à 45°, d'une part, par rapport à l'axe optique de l'organe d'acquisition (5,40,41) et, d'autre part, par rapport à l'axe orthogonal à la surface de l'écran (6).

3. Installation selon l'une des revendications 1 et 2, ***caractérisée*** en ce que l'organe d'acquisition est choisi dans le groupe comprenant une caméra vidéo, un appareil photographique muni d'un dispositif à transfert de charges, un scanneur couleur destiné à partir d'une image, d'un texte ou d'une photographie donnés, à capter ladite image, susceptible ensuite d'être transformée en signaux numériques par une carte de numérisation intégrée dans ladite unité de traitement (8), un magnétoscope associé à un écran vidéo, magnétoscope au niveau duquel on introduit une cassette vidéo dont on induit le défilement sur ledit écran, permettant la sélection par arrêt sur image de la ou des vues que l'on désire obtenir, et un appareil électronique permettant de lire une image préalablement enregistrée sous forme numérique sur un support amovible, tel qu'un CD-photo ou un lecteur de disquettes.

4. Installation selon l'une des revendications 1 et 2, ***caractérisée*** en ce que l'organe d'acquisition comprend deux caméras (40,41) dont le champ d'acquisition a un format respectivement vertical et horizontal, l'axe optique de l'une (40) des deux caméras étant confondu avec l'axe d'acquisition (36) d'images de l'installation et l'axe optique de l'autre caméra (41) étant virtuellement confondu avec ledit axe d'acquisition (36) d'images de l'installation au moyen d'un miroir semi-transparent (37), positionné selon la bissectrice des axes optiques réels des deux caméras (40,41), de sorte que l'acquisition de prises de vue est effectuée indifféremment par l'une, par l'autre ou par les deux caméras en fonction du type de photographies souhaité.

5. Installation selon l'une des revendications 1 à 4, ***caractérisée*** en ce que les signaux analogiques délivrés par l'organe d'acquisition (5,40,41) et correspondant aux images optiques captées par celui-ci, puis numérisés par l'unité centrale de traitement (8), sont traités au niveau de celle-ci pour intégrer le sujet perçu par ledit organe sur un arrière-plan, derrière un avant-plan ou à travers une surface transparente préalablement sélectionné par ledit sujet, lesdits plans étant stockés sous forme de signaux numériques dans une mémoire associée à ladite unité centrale (8), et l'image numérique ainsi obtenue après traitement étant également stockée dans ladite mémoire et étant représentée en temps réel sur ledit écran (6).

6. Installation selon la revendication 5, ***caractérisée*** en ce que l'unité centrale de traitement (8) comprend des moyens externes (9) d'acquisition de données, notamment sous forme d'ondes hertziennes, sous forme de liaison avec le réseau téléphonique commuté par modulateur et démodulateur ou avec le réseau numérique à intégration de services ou, également, par introduction directe par le biais d'un lecteur de supports magnétiques tels que des disquettes.

7. Installation selon l'une des revendications 1 à 6, ***caractérisée*** en ce que le dispositif de réalisation (10) est constitué par une imprimante couleur à sublimation thermique, connectée à l'unité centrale de traitement (8), afin de recevoir de celle-ci les signaux numériques correspondants à l'image retenue par le sujet.

8. Installation selon la revendication 7, ***caractérisée*** en ce que l'imprimante à sublimation thermique (10) comprend :
- un chargeur automatique (15) de films thermiques (11), susceptible de remplacer la cassette dedit film thermique épuisée par une cassette de film thermique neuf au niveau de la tête d'impression de la dite imprimante, et
- un chargeur automatique (16) de support d'impression (13), susceptible de remplacer la cassette épuisée desdits supports par une cassette pleine de ceux-ci.

9. Installation selon l'une des revendications 1 à 6, ***caractérisée*** en ce que le dispositif de réalisation des photographies est constitué par une unité de tirage de photographies (20), comprenant :
- un organe de stockage (26), de défilement (23) et d'exposition d'un papier photosensible inversible (25) destiné à être insolé par des signaux lumineux ;
- une unité de traitement chimique constituée d'une pluralité de bains juxtaposés (27 - 31) et munie d'un organe de transfert automatique du papier insolé dans les différents bains ;
- et un organe (32) destiné à assurer le séchage du cliché ainsi obtenu après tirage ;
- une unité de traitement numérique intégrée ou connectée à l'unité centrale de traitement (8), et susceptible de faire subir aux signaux issus de ladite unité centrale un traitement d'inversion vidéo ;
- un écran (21) connecté à ladite unité centrale de traitement (8) et destiné à matérialiser en négatif l'image à réaliser ;
- au moins un objectif (22) placé sur l'axe optique dudit écran (21) et destiné à projeter l'image matérialisée de l'écran (21) et à adapter son format au niveau de la zone d'exposition dudit papier photosensible (25).

10. Installation selon la revendication 9, ***caractérisée*** en ce que l'écran (21) est un écran couleur ou un écran noir et blanc sur l'axe optique duquel on interpose des filtres chromatiques au voisinage de l'objectif (22), afin de restituer l'image en couleur au niveau du papier photosensible (25) à insoler.

11. Installation selon l'une des revendications 9 et 10, ***caractérisée*** en ce que l'organe de stockage du papier photosensible est constitué par deux cassettes (42,43), l'extrémité de chacune des bandes de papier (49,50) qu'elles renferment étant amorcée au niveau d'un jeu de rouleaux moteur-presseur respectif (45,46), et l'une (42) des cassettes comportant au voisinage de sa fente de sortie un organe de détection de présence (48) de la fin de la bande papier (49), induisant lorsque la fin de ladite bande est effectivement détectée le renvidage de la bande papier (49) à l'intérieur de la cassette (42) considérée par actionnement du jeu de rouleaux (45), et corrélativement l'amorçage de la bande papier (50) de la seconde cassette (43) au niveau de l'organe de défilement (23) de l'unité de tirage (20) par actionnement du jeu de rouleaux moteur-presseur (46).

12. Installation selon la revendication 3, ***caractérisée*** en ce que l'organe d'acquisition est constitué par une caméra vidéo (5), et en ce que la séquence de photographies est un film enregistré sur une cassette vidéo, directement à partir des images perçues par la caméra (5) et traitées par l'unité centrale (8), et à partir des signaux sonores captés par un microphone intégré dans ladite installation, le film ainsi réalisé étant alors enregistré au moyen d'un magnétoscope.

13. Installation selon la revendication 12, ***caractérisée*** en ce que le film capté par la caméra vidéo (5) est mixé au niveau de l'unité centrale (8) avec un fond animé stocké sur une disquette ou un vidéo-disque, dont les informations sont lues au moyen d'un lecteur approprié, ou sur une cassette vidéo dont l'enregistrement est lu au moyen d'un second magnétoscope, lesdites informations ainsi acquises étant transférées à l'unité centrale (8).

## Patentansprüche

1. Einrichtung zur Herstellung von Fotografien oder Fotografie-Sequenzen, mit:
- einem Bildaufnahmemittel (5,40,41) mit einer optischen Achse, welches dazu vorgesehen ist, das optische Bild der Person (38), die sich auf der genannten optischen Achse befindet und von der eine Fotografie oder eine Fotografie-Sequenz erzeugt werden soll, aufzunehmen,
- einem Mittel (8) zur Speicherung der durch das Bildaufnahmemittel aufgenommenen Bilder;
- einem mit dem Aufnahmemittel (5,40,41) verbundenen Bildschirm (6), der dazu vorgesehen ist, das oder die durch das genannte Aufnahmemittel aufgenommene Bild(er) zu reproduzieren,
- einem semitransparenten Spiegel (4), der auf der optischen Achse des Aufnahmemittels (5,40,41) angeordnet und entlang der Winkelhalbierenden des durch die optische Achse des Aufnahmemittels (5,40,41) und die senkrecht zur Oberfläche des Bildschirms (6) verlaufende Achse definierten Winkels orientiert ist, so daß ein virtuelles Bild des genannten Bildschirms auf der optischen Achse des Aufnahmemittels erzeugt wird und die gleichzeitige Betrachtung des oder der Bildes(er), die von dem genannten Aufnahmemittel aufgenommen werden, durch die genannte Person (38) ermöglicht wird,
- einer zentralen Recheneinheit (8), die mit dem Aufnahmemittel (5,40,41) verbunden ist und eine Digitalwandler umfaßt, der dazu vorgesehen ist, die analogen, von dem genannten Aufnahmemittel zugeführten Signale, die den hierdurch aufgenommenen optischen Bildern entsprechen, zu digitalisieren, wobei die so erhaltenen digitalen Signale einer Signalverarbeitung in der genannten zentralen Recheneinheit unterziehbar sind und anschließend einem Bildschirm (6) zuführbar sind, so daß die gleichzeitige Betrachtung des oder der Bildes(er), die durch das Aufnahmemittel (5,40.41) aufgenommen und gegebenenfalls durch die zentrale Recheneinheit (8) verarbeitet wurden, durch die Person (38) ermöglicht wird,
- einer Herstellungseinheit (10,20) zur Durchführung der Herstellung der Fotografie oder der Fotografie-Sequenz,
- und einem zwischen der zentralen Recheneinheit (8) und der Person angeordneten Betätigungsorgan (17), welches durch diese Person betätigbar ist,
**dadurch gekennzeichnet,** daß das genannte Betätigungsorgan dazu vorgesehen ist, einerseits das auf dem Bildschirm (6) erzeugte Bild in dem Moment seiner Betätigung innerhalb des der zentralen Recheneinheit (8) zugeordneten Speichers erstarren zu lassen und andererseits die Herstellung des so erstarrten Bildes auf einem Träger durch die Herstellungseinheit (10,20), die mit der genannten zentralen Recheneinheit verbunden ist, auszulösen.

2. Einrichtung nach Anspruch 1, **dadurch gekennzeichnet**, daß der semitransparente Spiegel (4) im Winkel von 45° einerseits bezüglich der optischen Achse des Aufnahmemittels (5,40,41) und andererseits bezüglich der zur Oberfläche des Bildschirms (6) rechtwinkligen Achse ausgerichtet ist.

3. Einrichtung nach einem der Ansprüche 1 und 2, **dadurch gekennzeichnet,** daß das Aufnahmemittel aus einer Gruppe ausgewählt ist, welche die folgenden Mittel umfaßt: eine Video-Kamera; einen Fotoapparat mit einer CCD-Bild-Aufnahmevorrichtung; einen Farbscanner, der dazu vorgesehen ist, ausgehend von einem vorgegebenen Bild, einem vorgegebenen Text oder einer vorgegebenen Fotografie, das genannte Bild aufzunehmen, welches anschließend in digitale Signale durch den in die genannte zentrale Recheneinheit (8) integrierte Digitalwandler umgewandelt wird; einen Video-Recorder, der einem Video-Bildschirm zugeordnet ist und in den eine Video-Kassette einschiebbar ist, die auf dem genannten Video-Bildschirm abspielbar ist, so daß die Auswahl durch Standbild der Ansicht, die man zu erhalten wünscht, ermöglicht wird; und einen elektronischen Apparat, der das Lesen eines zuvor in digitaler Form aufgenommenen Bildes auf einem entfernbaren Träger ermöglicht, wie beispielsweise einem Foto-CD-Lesegerät oder einem Disketten-Lesegerät.

4. Einrichtung nach einem der Ansprüche 1 und 2, **dadurch gekennzeichnet**, daß das Aufnahmemittel zwei Kameras (40,41) umfaßt, deren Aufnahmefeld einerseits ein Hochformat und andererseits ein Querformat hat, wobei die optische Achse der einen Kamera (40) mit der Bildaufnahmeachse (36) der Einrichtung zusammenfällt und die optische Achse der anderen Kamera (41) virtuell mit der genannten Bildaufnahmeachse (36) der Einrichtung zusammenfällt mittels eines semitransparenten Spiegels (37), der entlang der Winkelhalbierenden der reellen optischen Achsen der beiden Kameras (40,41) angeordnet ist, so daß die Aufnahme der Abbildungen beliebig durch die eine, die andere oder durch beide Kameras in Abhängigkeit von dem gewünschten Fototyp erfolgen kann.

5. Einrichtung nach einem der Ansprüche 1 bis 4, **dadurch gekennzeichet,** daß die durch das Aufnahmemittel (5,40,41) zugeführten analogen Signale, die den hierdurch aufgenommenen optischen Bildern entsprechen und die anschließend durch die zentrale Recheneinheit (8) digitalisiert werden, in dieser genannten Recheneinheit weiterverarbeitet werden, um die durch das genannte Aufnahmemittel aufgenommmene Person auf einen Hintergrund, hinter einen Vordergrund oder durch eine transparente Bildfläche hindurch zu integrieren, welches Bildmotiv zuvor durch die genannte Person ausgewählt wurde, wobei die genannten Bildmotive Vordergründe, Hintergründe und Bildflächen in Form digitaler Signale in einem Speicher gespeichert sind, der der genannten zentralen Recheneinheit (8) zugeordnet ist und wobei das so erhaltene digitale Bild nach der Weiterverarbeitung ebenfalls in dem genannten Speicher gespeichert wird und in Echtzeit auf dem Bildschirm (6) abgebildet wird.

6. Einrichtung nach Anspruch 5, **dadurch gekennzeichnet,** daß die zentrale Recheneinheit (8) externe Datenerfassungsmittel (9) umfaßt, insbesondere in Form von Funkwellen-Empfängern, in Form einer Verbindung mit dem Telefonnetz mittels Modulator und Demodulator (Modem) oder mit dem Integrated Services Digital Network (ISDN-Netz) oder ebenfalls durch direkte Eingabe mittels eines Lesegeräts für magnetische Datenträger, wie zum Beispiel Disketten.

7. Einrichtung nach einem der Ansprüche 1 bis 6, **dadurch gekennzeichnet,** daß die Herstellungsvorrichtung (10) von einem Farbdrucker mit thermischer Sublimierung gebildet wird, der mit der zentralen Recheneinheit (8) verbunden ist, um von dieser die digitalen Signale, die dem durch die Person festgehaltenen Bild entsprechen, zu empfangen.

8. Einrichtung nach Anspruch 7, **dadurch gekennzeichnet,** daß der Drukker (10) mit thermischer Sublimierung folgendes umfaßt:
- ein automatisches Magazin (15) für thermische Filme (11), welches dazu geeignet ist, die verbrauchte Kassette mit dem genannten thermischen Film durch eine neue Kassette mit thermischem Film im Bereich des Druckkopfes des genannten Druckers zu ersetzen und
- ein automatisches Magazin (16) für den Druckträger (13), welches zum Ersetzen der leeren Druckträger-Kassette durch eine volle Druckträger-Kassette geeignet ist.

9. Einrichtung nach einem der Ansprüche 1 bis 6, **dadurch gekennzeichnet,** daß die Vorrichtung zur Herstellung der Fotografie durch eine Abzieh-Einheit für Fotografien (20) gebildet wird, welche folgendes umfaßt:
- ein Mittel zur Speicherung (26), zum Abwickeln (23) und zum Belichten eines umkehrenden, lichtempfindlichen Papiers (25), welches zur Belichtung durch Lichtsignale vorgesehen ist,
- eine Einheit für die chemische Behandlung, welche aus einer Mehrzahl aufeinanderfolgender Bäder (27 - 31) besteht und mit einem Mittel zur automatischen Hindurchführung des belichteten Papiers durch die unterschiedlichen Bäder versehen ist;
- und ein Mittel (32) zur Bewirkung der Trocknung des nach dem Abziehvorgang erhaltenen Bildes;
- eine digitale Recheneinheit, die in die zentrale digitale Recheneinheit (8) integriert oder hiermit verbunden und dazu geeignet ist, die von der genannten zentralen Recheneinheit abgegebenen Signale einer Video-Umkehrung zu unterziehen;
- ein Bildschirm (21), der mit der genannten zentralen Recheneinheit (8) verbunden und dazu vorgesehen ist, das Negativ des herzustellenden Bildes zu erzeugen;
- mindestens ein Objektiv (22), welches auf der optischen Achse des genannten Bildschirms (21) angeordnet und dazu vorgesehen ist, das auf dem Bildschirm (21) erzeugte Bild zu projizieren und sein Format im Bereich der Belichtungszone des genannten lichtempfindlichen Papiers (25) anzupassen.

10. Einrichtung nach Anspruch 9, **dadurch gekennzeichnet,** daß der Bildschirm (21) ein Farbbildschirm oder ein Schwarz-Weiß-Bildschirm ist, auf dessen optischer Achse chromatische Filter in der Nähe des Objektivs (22) angeordnet sind, um den Aufbau eines Farbbildes auf dem zu belichtenden lichtempfindlichen Papier (25) zu ermöglichen.

11. Einrichtung nach einem der Ansprüche 9 oder 10, **dadurch gekennzeichnet,** daß das Mittel zur Speicherung des lichtempfindlichen Papiers von zwei Kassetten (42,43) gebildet wird, wobei die Enden der beiden hierin eingeschlossenen Papierstreifen (49,50) in je einen Antrieb/Andrückrollensatz (45,46) eingeführt werden, wobei eine der Kassetten (42) im Bereich ihres Austrittschlitzes ein Mittel (48) zur Erfassung der Anwesenheit des Endes des Papierstreifens (49) umfaßt, welches, wenn das Ende des genannten Streifens tatsächlich erfaßt wird, das Aufwickeln dieses Papierstreifens (49) in das Innere der Kassette (42) durch Betätigung des Rollensatzes (45) bewirkt und gleichzeitig das Einführen des Papierstreifens (50) de zweiten Kassette (43) in das Abspulorgan (23) der Abzugseinheit (20) durch Betätigung des Antrieb/Andrückrollensatzes (46) bewirkt.

12. Einrichtung nach Anspruch 3, **dadurch gekennzeichnet,** daß das Aufnahmemittel von einer Video-Kamera (5) gebildet wird und daß die Sequenz der Fotografien ein auf eine Video-Kassette aufgenommener Film ist, der direkt ausgehend von den durch die Kamera (5) aufgenommenen und durch die zentrale Recheneinheit (8)bearbeiteten Bildern und ausgehend von Schallsignalen, die durch ein in die genannte Einrichtung integriertes Mikrofon aufgenommen werden, ausgeht, wobei der so hergestellte Film durch einen Video-Recorder aufgezeichnet wird.

13. Einrichtung nach Anspruch 12, **dadurch gekennzeichnet,** daß der durch die Video-Kamera (5) aufgenommene Film in der zentralen Recheneinheit (8) mit einem animierten Bildmotiv gemischt wird, welches auf einer Diskette oder einer Bildplatte gespeichert ist, deren Informationen mittels eines geeigneten Lesegerätes gelesen werden, oder welche auf einer Video-Kassette gespeichert ist, deren Aufnahme mittels eines zweiten Video-Recorders gelesen wird, wobei die genannten, auf diese Weise erhaltenen Informationen der zentralen Recheneinheit (8) zugeführt werden.

## Claims

1. An installation for realizing photographs or sequences of photographs, comprising :
- an image acquisition element (5, 40, 41) provided with an optical axis, intended to pick up the optical image of the subject (38) standing on said optical axis and of whom it is desired to take a photograph or a sequence of photographs,
- an element (8) for storing the information picked up by said acquisition element,
- a screen (6) connected to the acquisition element (5, 40, 41) and intended to reproduce the image or the images seen by said acquisition element,
- a half-silvered mirror (4) mounted on the optical axis of the acquisition element (5, 40, 41) and directed along the bisector of the angle defined by the optical axis of the acquisition element (5, 40, 41) and the axis orthogonal to the surface of the screen (6), so as to generate a virtual image of said screen on the optical axis of the acquisition element, and to allow simultaneous viewing by said subject (38) of the image or of the images seen by said acquisition element,
- a central processing unit (8) connected to the acquisition element (5, 40, 41) and fitted with a digitization card intended to digitize the analog signals picked up by said acquisition element and corresponding to the optical images seen by the latter, the digital signals thus obtained being capable of undergoing processing at said central unit, then being conveyed to the screen (6) so as to allow simultaneous viewing by the subject (38) of the image or of the images seen by the acquisition element (5, 40, 41) and possibly processed by the central processing unit (8),
- a realization device (10, 20) for actually realizing the photograph or the sequence of photographs,
- an element for interaction (17) between the central processing unit (8) and the subject (38), capable of beinf actuated by the latter,
characterized in that said element for interaction (17) is intended, on the one hand, to freeze the image reproduced on the screen (6) at the instant of its actuation in the memory associated with the central unit (8) and, on the other hand, to induce the production on a medium of the image thus freezed by the realization device (10, 20) connected to said central unit.

2. The installation as claimed in claim 1, wherein the half-silvered mirror (4) is directed at 45°, on the one hand, with respect to the optical axis of the acquisition element (5, 40, 41) and, on the other hand, with respect to the axis orthogonal to the surface of the screen (6).

3. The installation as claimed in either of claims 1 or 2, wherein the acquisition element is chosen from the group comprising a video camera, a photographic camera fitted with a charge-transfer device, a color scanner, intended from a given image, text or photograph, to pick up said image, which is then capable of being converted into digital signals by a digitization card fitted into said processing unit (8), a video tape recorder associated with a video screen, into which video tape recorder a video cassette is inserted and is played on said screen, allowing freeze-frame selection of the view or views which it is desired to obtain, and an electronic apparatus making it possible to read an image previously recorded in digital form on a removable medium, such as a photographic CD or a floppy disk reader.

4. The installation as claimed in either of claims 1 or 2, wherein the acquisition element comprises two cameras (40, 41) whose field of acquisition is provided with a format respectively vertical and horizontal, the optical axis of one (40) of the two cameras being coincident with the image acquisition axis (36) of the installation, and the optical axis of the other camera (41) being virtually coincident with said image acquisition axis (36) of the installation by means of a half-silvered mirror (37) positioned along the bisector of the real optical axes of the two cameras (40, 41), so that the acquisition of shots is effected equally by one or other or both of the cameras as a function of the type of photographs desired.

5. The installation as claimed in one of claims 1 to 4, wherein the analog signals picked up by the acquisition element (5, 40, 41) and digitized by the central processing unit (8) are treated at the latter in order to fit the subject seen by said element onto a background, behind a foreground or through a transparent surface previously selected by said subject, said background and foreground being stored in the form of digital signals in a memory associated with said central unit (8), and the digital signal thus obtained after processing also being stored in said memory and being shown in real time on said screen (6).

6. The installation as claimed in claim 5, wherein the central processing unit (8) comprises external data-acquisition means (9), in particular in radio form, in the form of a link with the switched telephone network by modulator and demodulator or with the digital network using integration of services, or alternatively, by direct introduction using a reader for magnetic media, such as floppy disks.

7. The installation as claimed in one of claims 1 through 6, wherein the realization device (10) consists of a color printer using thermal sublimation, connected to the central processing unit (8), in order to receive from the latter the digital signals corresponding to the image selected by the subject.

8. The installation as claimed in claim 7, wherein the printer (10) using thermal sublimation comprises :
- an automatic loader (15) of thermal films (11), capable of replacing the exhausted cassette of said thermal film by a cassette of new thermal film at the printing head of said printer,
- an automatic loader (16) of printing medium (13), capable of replacing the exhausted cassette of said media by a full cassette of the latter.

9. The installation as claimed in one of claims 1 through 6, wherein the device for taking the photographs consists of a unit (20) for printing photographs, comprising :
- an element for storing (26), unwinding (23) and exposing a reversible photosensitive paper (25) intended to be exposed to light signals ;
- a chemical processing unit, consisting of a plurality of juxtaposed baths (27-31) and fitted with an automatic element for transferring the exposed paper into the various baths ;
- and an element (32) intended to dry the frame thus obtained after printing ;
- a digital processing unit, fitted to or connected to the central processing unit (8), and capable of subjecting the signals coming from said central unit to video reversal processing ;
- a screen (21) connected to said central processing unit (8) and intended to form the image to be taken in negative ;
- at least one objective (22) placed on the optical axis of said screen (21) and intended to project the image of the screen (21) formed, and to adapt its format to the zone of exposure of said photosensitive paper (25).

10. The installation as claimed in claim 9, wherein the screen (21) is a color screen or a black and white screen, on the optical axis of which color filters are interposed in the vicinity of the objective (22) in order to reconstruct the color image at the photosensitive paper (25) to be exposed.

11. The installation as claimed in either of claims 9 or 10, wherein the element for storing the photosensitive paper consists of two cassettes (42, 43), the end of each of the strips of paper (49, 50) which they contain being prewound onto a respective set of drive/press rolls (45, 46), and one (42) of the cassettes comprising in the vicinity of its exit slot an element (48) for detecting the presence of the end of the paper strip (49), causing when the end of said strip is actually detected rewinding of this paper strip (49) inside the cassette (42) in question by actuation of the set of rolls (45), and correlatively the prewinding of the paper strip (50) of the second cassette (43) onto the unwinding element (23) of the printing unit (20) by actuation of the set of drive/press rolls (46).

12. The installation as claimed in claim 3, wherein the acquisition element consists of a videocamera (5), and the sequence of photographs is a film recorded on a video cassette, directly from images seen by the camera (5) and processed by the central unit (8), and from audio signals picked up by a microphone fitted to the booth (1), the film thus produced then being recorded by means of a video tape recorder.

13. The installation as claimed in claim 12, wherein the film picked up by the video camera (5) is mixed at the central unit (8) with an animated backdrop stored on a floppy disk or a video disk, whose information is read using an appropriate reader, or on a video cassette whose recording is read using a second video tape recorder, said information thus acquired being transferred to the central unit (8).
